Europäisches Patentamt

**European Patent Office**

Office européen des brevets

(19)

(11) Veröffentlichungsnummer : **0 063 638
B1**

(12) **EUROPÄISCHE PATENTSCHRIFT**

(45) Veröffentlichungstag der Patentschrift :
05.03.86

(21) Anmeldenummer : **81109138.8**

(22) Anmeldetag : **28.10.81**

(51) Int. Cl.⁴ : **H 04 B   3/23**

(54) **Digital-Fernmeldesystem.**

(30) Priorität : **28.04.81 DE 3116863**

(43) Veröffentlichungstag der Anmeldung :
**03.11.82 Patentblatt 82/44**

(45) Bekanntmachung des Hinweises auf die Patenterteilung : **05.03.86 Patentblatt 86/10**

(84) Benannte Vertragsstaaten :
**AT BE CH FR GB IT LI NL SE**

(56) Entgegenhaltungen :
**EP-A- 0 019 194
DE-A- 3 116 817
GB-A- 2 007 946
US-A- 4 024 358
PATENTS ABSTRACTS OF JAPAN, Band 4, Nr. 36(E-
3)(518), 26. März 1980, Seite 147E3
ELECTRONICS AND COMMUNICATIONS IN JAPAN,
Band 51-A, Nr. 7, August 1968, Seiten 10-18, Washington, USA A. MIURA et al.: "Blockless echo suppressor"**

(73) Patentinhaber : **Siemens Aktiengesellschaft
Berlin und München Wittelsbacherplatz 2
D-8000 München 2 (DE)**

(72) Erfinder : **Strehl, Herbert, Dipl.-Ing.
Brozzaweg 15
D-8000 München 70 (DE)**

## Beschreibung

In Fernmeldesystemen können bei der Übertragung von Signalen auf dem Übertragungsweg lineare Signalstörungen entstehen, zu deren Beseitigung sogenannte Kompensatoren eingesetzt werden können. Solche Störungen können z. B. in Fernmeldesystemen, in denen zur Überführung von Zweidrahtleitungen in vierdrähtige Abschnitte und umgekehrt Gabelschaltungen (Brückenschaltungen) vorgesehen sind, dadurch hervorgerufen werden, daß eine solche Gabelschaltung eine exakte Nachbildung der Eingangsimpedanz der Zweidrahtleitung enthalten müßte, um eine vollständige Entkopplung des von der Gabelschaltung wegführenden Empfangszweigs der Vierdrahtleitung von dem zur Gabelschaltung hinführenden Sendezweig der Vierdrahtleitung zu erzielen, wozu die Leitungsnachbildung im Einzelfall durch manuellen Abgleich an die jeweilige Zweidrahtleitung angepaßt werden muß ; mit einer in der Praxis vielfach angewendeten Kompromißnachbildung, mit der man unterschiedlichen Leitungsimpedanzen Rechnung zu tragen sucht, vermag die Gabelschaltung, die dann eine von der jeweiligen Leitungsimpedanz abhängige endliche Sperrdämpfung aufweist, die Sende- und Empfangssignale nur begrenzt voneinander zu entkoppeln. Auf der anderen Seite können auch bei optimalem Abgleich der Gabelschaltung Echos des eigenen Sendesignals, die durch auf der Zweidrahtleitung vorhandene Reflexionsstellen hervorgerufen werden, nicht ohne weiteres unterdrückt werden.

Zur Eliminierung oder zumindest Verringerung solcher Echosignale ist es (aus US-A-40 24 358) bekannt, zur Echokompensation bei einer Gabelschaltung zwischen ankommendem und abgehendem Vierdrahtleitungszweig eine Kompensationsschaltung vorzusehen, die vor Beginn einer Konversation einen Prüfimpuls in den Echopfad aussendet und die daraufhin erhaltene Impulsantwort abtastete und die Abtastwerte in einem ersten Speicher einspeichert ; in einer mit Hilfe eines das im ankommenden Vierdrahtleitungszweig auftretende Sendesignal speichernden zweiten Speichers, einer Multiplikationsschaltung und einer Integrationsschaltung realisierten Faltungsoperation wird dann durch Faltung (d. h. Produktbildung und anschließende Integration) zwischen der gespeicherten Impulsantwort und dem Sendesignal ein von dem im abgehenden Vierdrahtleitungszweig auftretenden Empfangssignal zu subtrahierendes Korrektursignal erzeugt. Ein solcher Echokompensator erfordert einen relativ hohen schaltungstechnischen Aufwand, insbesondere für einen zweiten Speicher, eine Multiplikationsschaltung und eine Integrationsschaltung. Stattdessen ist es auch möglich, wie dies ebenfalls bereits (aus AGARD Conference Proceedings No. 103 (1972), 12-1...12-16) bekannt ist, das Kompensationssignal mit Hilfe eines variablen Filters zu erzeugen, das beim Aufbau jeder Verbindung so eingestellt wird, daß es auf ein Testsignal hin dieselbe Impulsantwort wie der Echopfad liefert ; dabei kann allerdings die Korrelation zwischen Sende- und Empfangssignal eine störende Rolle spielen.

Ein anderer (aus DE-A-28 46 105 = GB-A-20 07 946) bekannter digitaler Übersprech- und Echokompensator weist einen Kompensationssignal-Momentanwerte codiert speichernden Kompensationssignalspeicher auf, der bei einer über eine Ansteuerschaltung bewirkten Ansteuerung nach Maßgabe der Sendesignalelemente die entsprechenden Momentanwerte in ihrer codierten Darstellung einem Digital/Analog-Wandler zuführt, welcher daraus das entsprechende, von den gestörten Empfangssignalelementen zu subtrahierende Kompensationssignal bildet. Dabei ist die Ansteuerschaltung durch einen Decodierer zur Abtastung der jeweils auftretenden Sendesignalelementfolgen gebildet, der in Abhängigkeit von der jeweiligen Sendesignalelementfolge ein dieser Sendesignalelementfolge entsprechendes Kompensationssignal aus dem Kompensationssignalspeicher auswählt.

Bekannt ist es (aus DE-B-29 20 575) auch, einen anderen Weg zu gehen und ein Kompensationssignal zu speichern, das auf jeden Sendesignalimpuls hin aus dem Kompensationssignalspeicher ausgelesen und dem von der Gabelschaltung abgehenden Vierdrahtleitungszweig zugeführt wird.

In beiden Fällen können die erforderlichen Kompensationssignalelemente bei Inbetriebnahme des betreffenden Fernmeldesystems in einem extern angeschalteten Rechner errechnet und in den Kompensationssignalspeicher eingeschrieben werden. Nachteilig ist dabei das Erfordernis einer Neuberechnung der Speicherinhalte bei Änderungen der Leitungsverhältnisse, beispielsweise bei Umrangierungen im Leitungsnetz. Sieht man, wie dies ebenfalls (aus DE-A-28 46 105 = GB-A-20 07 946) bekannt ist, eine adaptive Störsignalimpensation vor, so muß dazu wiederum die Voraussetzung zumindest über einen bestimmten Zeitraum unkorrelierter bzw. statistisch voneinander unabhängiger Sende- und Empfangssignale gegeben sein ; solche Korrelationen können aber, wenn gerade nicht gesprochen wird, bei der üblichen Verwendung ein und desselben Scramblers kaum vermieden werden.

Aus JP-A-55-10243, die den Oberbegriff von Patentanspruch 1 belegt, ist es auch schon bekannt, das Störsignal, das auf einen bei von in der Gegenrichtung zu übertragenden Signalimpulsen freier Zweidrahtleitung im ankommenden Vierdrahtleitungszweig auftretenden jeweils ersten Sendesignalimpuls hin im abgehenden Vierdrahtleitungszweig auftritt, seriell in den Kompensationssignalspeicher einzuschreiben und daraus auf jeden weiteren Sendesignalimpuls hin als Kompensationssignal wieder auszulesen ; dabei ist jedoch eine der Länge des Störsignals entsprechende Mehrzahl von jeweils das gleiche Störsignal speichernden Kompensationssignalspeichern erforderlich.

Der Erfindung liegt nun die Aufgabe zugrunde, ein Digital-Fernmeldesystem mit einer Gabelschaltung und einer parallel dazu vorgesehenen Kompensationsschaltung anzugeben, bei dem unter Vermeidung von Nachteilen, wie sie im vorstehenden angeführt sind, die angestrebte Störsignalkompensation in vorteilhafter Weise ohne großen zusätzlichen schaltungstechnischen Aufwand ermöglicht wird.

Die Erfindung betrifft ein Digital-Fernmeldesystem mit mindestens einer zwischen einem Vierdrahtleitungsabschnitt und einem Zweidrahtleitungsabschnitt liegenden Gabelschaltung, insbesondere zum teilnehmerseitigen oder vermittlungsseitigen Abschluß einer Zweidraht-Teilnehmeranschlußleitung, und mit einer zwischen dem bei der Gabelschaltung ankommenden Vierdrahtleitungszweig und dem von der Gabelschaltung abgehenden Vierdrahtleitungszweig vorgesehenen Übersprech- u./o. Echo-Kompensationsschaltung mit einem nach Maßgabe von Sendesignalimpulsen, die in dem bei der Gabelschaltung ankommenden Vierdrahtleitungszweig auftreten, ansteuerbaren Kompensationssignalspeicher, des ausgangsseitig zu dem von der Gabelschaltung abgehenden Vierdrahtleitungszweig führt, wobei ein Störsignal, das auf einen bei von in der Gegenrichtung zu übertragenden Signalimpulsen freier Zweidrahtleitung im ankommenden Vierdrahtleitungszweig auftretenden jeweils ersten Sendesignalimpuls hin im abgehenden Vierdrahtleitungszweig auftritt, seriell in den Kompensationssignalspeicher eingeschrieben wird und daraus zumindest während der nachfolgenden Verbindung auf jeden weiteren Sendesignalimpuls hin als Kompensationssignal wieder ausgelesen wird ; ein solches Digital-Fernmeldesystem ist erfindungsgemäß dadurch gekennzeichnet, daß der Kompensationssignalspeicher durch einen Umlaufspeicher mit einer Umlaufzeit gleich einem Vielfachen einer Bitzeitspanne gebildet ist und eine entsprechende Vielzahl von in jeweils einer Bitzeitspanne entsprechenden Abständen aufeinanderfolgenden Ausgängen aufweist, die durch eine nachfolgende Addierschaltung zusammengefaßt sind, über die die einzelnen Ausgänge in einer einer Reihe von Sendesignalimpulsen entsprechenden Reihenfolge jeweils für die Dauer des Vielfachen einer Bitzeitspanne mit dem abgehenden Vierdrahtleitungszweig verbindbar sind.

Die Erfindung, bei der die für das Einspeichern des Störsignals bei von in der Gegenrichtung übertragenen Signalimpulsen freier Zweidrahtleitung verfügbare Zeit durch die doppelte Signallaufzeit auf der Leitung oder auch durch eine Verzögerungsprozedur in der Erzeugung eines Antwortsignals bedingt sein kann und mit der bei mehr oder weniger schnell aufeinanderfolgenden Sendesignalimpulsen und — durch lange Echolaufzeiten bedingt — länger als eine Bitzeitspanne andauerndem Kompensationssignal eine Überlagerung von durch mehrfaches Auslesen einunddesselben Kompensationssignalspeichers gewonnenen, unter sich gleichförmigen Kompensationssignalen verbunden ist, gestattet eine sehr einfache und zugleich von einer Korrelation zwischen Sende- und Empfangssignalen unbeeinträchtigte Gewinnung eines Kompensationssignals, das vorteilhafterweise nicht eigens errechnet werden muß, so daß mit einer Kompensationssignalerrechnung verbundene Zeitschwierigkeiten vermieden sind. Nachdem keine hohen Verarbeitungsgeschwindigkeiten erforderlich sind, kann das angegebene Kompensationsprinzip auch bei höheren Übertragungs-Bitragen von z. B. 128 kbit/s Anwendung finden. Mit der Möglichkeit einer Realisierung der Kompensationssignalschaltung mit einem relativ einfachen Schaltungsaufbau nicht nur begrenzter Verarbeitungsgeschwindigkeit, sondern zugleich auch begrenzten Stromverbrauchs eröffnet die Erfindung zugleich auch die Möglichkeit einer Fernspeisbarkeit der Kompensationsschaltung, wie dies besonders bei einer teilnehmerseitig vorzusehenden Kompensationsschaltung erwünscht ist. Von Vorteil ist weiterhin die Eignung der Erfindung für eine teilnehmerseitige Kompensationssignalerzeugung auch im Rahmen von über Zweidraht-Vermittlungsstellen verlaufenden Fernmeldeverbindungen mit demzufolge von Verbindung zu Verbindung sich ändernden Leitungsverhältnissen, indem zu Beginn der Übertragung nacheinander beide an einer Verbindung beteiligte Fernmelde-Teil-nehmerstellen sich jeweils das Kompensationssignal in einer Prozedur erzeugen können, deren der doppelten Signallaufzeit entsprechende Dauer im Vergleich zu sonst etwa erforderlichen Adaptionsprozeduren vernachlässigbar klein ist.

In weiterer Ausgestaltung der Erfindung kann bei einer Gabelschaltung, die eine Zweidraht-Teilnehmeranschlußleitung teilnehmerseitig abschließt, jeweils bei einem Anschalten der Fern-Speisespannung ein solcher erster Sendesignalimpuls erzeugt und das daraus resultierende Störsignal in den zugehörigen Kompensationssignalspeicher eingeschrieben werden, aus dem es danach wiederholt jeweils auf einen Sendesignalimpuls hin als Kompensationssignal ausgelesen wird ; hiermit kann in zweckmäßiger Weise der Möglichkeit einer Unterbrechung des Speisestromkreises und eines daraus resultierenden Verlustes des bis dahin gespeicherten Störsignals, etwa aufgrund einer Leitungsumrangierung in der Vermittlungsstelle oder Umsteckens eines Teilnehmerapparates von einer Anschlußsteckdose an eine andere, Rechnung getragen werden.

Bei einer Gabelschaltung, die eine vermittlungsstellenseitig von einer Gabelschaltung abgeschlossene Zweidraht-Teilnehmeranschlußleitung teilnehmerseitig abschließt, kann sich die Erfindung den Umstand, daß sich die durch Echos und Fehlanpassung bedingten Störsignale allenfalls bei einer Umrangierung der Teilnehmeranschlußleitung ändern, in der Weise zu Nutze machen, daß das Kompensationssignal beim ersten vom Teilnehmer ausgehenden Verbindungsaufbau, insbesondere etwa beim ersten von der Teilnehmerstelle ausgehenden Proberuf, in den zugehörigen Kompensationssignalspeicher eingeschrieben wird und daraus während späterer über die Zweidraht-Teilnehmeranschlußleitung verlaufender Verbindungen als Kompensationssignal wieder ausgelesen wird. In der umgekehrten Übertragungsrichtung kann bei einer Gabelschaltung, die eine teilnehmerstellenseitig von einer Gabelschaltung abgeschlossene Zweidraht-Teilnehmeranschlußleitung vermittlungsstellenseitig abschließt, das Kompensationssignal beim ersten zu dem betreffenden Teilnehmer hinführenden Verbindungsaufbau, insbesondere etwa beim ersten Proberückruf zu der betreffenden Teilnehmerstelle, in den zugehörigen Kompensationssignalspeicher eingeschrieben werden und daraus während späterer über die Zweidraht-Teilnehmeranschlußleitung veaufender Verbindungen als Kompensationssignal wieder ausgelesen werden.

Zweckmäßigerweise wird in weiterer Ausgestaltung der Erfindung das Störsignal zunächst quantisiert und codiert und dann in Form des so erhaltenen Binärsignals in den Kompensationssignalspeicher eingeschrieben, der dann über eine nachfolgende Digital/Analog-Wandlerschaltung zum abgehenden Vierdrahtleitungszweig führt ; dabei wird das Störsignal vorzugsweise über einen Deltamodulator in Form des so erhaltenen ΔM-Signals in den dann über eine Deltademodulatorschaltung zum abgehenden Vierdrahtleitungszweig führenden Kompensationssignalspeicher eingeschrieben.

Ist das Störsignal digitalisiert (vorzugsweise in ΔM-Darstellung) im Kompensationssignalspeicher enthalten, wobei dann dem Speicherausgang bzw. jedem Speicherausgang ein Digital/Analog-Wandler nachgeschaltet ist, so kann der Kompensationssignalspeicher in weiterer Ausgestaltung der Erfindung durch ein Umlauf-Schieberegister gebildet sein.

Neben dem Umlaufspeicher kann in weiterer Ausgestaltung der Erfindung ein statischer Speicher vorgesehen sein, in den das Kompensationssignal ebenfalls eingeschrieben wird, um daraus jeweils zu Beginn eines neuen Übertragungsvorganges neu in den Umlaufspeicher eingelesen werden.

Anhand der Zeichnungen sei die Erfindung noch näher erläutert.

Dabei zeigt

Figur 1 schematisch ein Zweidraht-Vierdraht-Fernmelde-system und ein Beispiel für ein darin auftretendes Störsignal ;

Figur 2 zeigt ein Ausführungsbeispiel eines Digital-Fernmeldesystems mit Störsignalkompensation gemäß der Erfindung.

Figur 3 und Figur 4 zeigen weitere schaltungstechnische Einzelheiten einer entsprechenden Kompensationsschaltung.

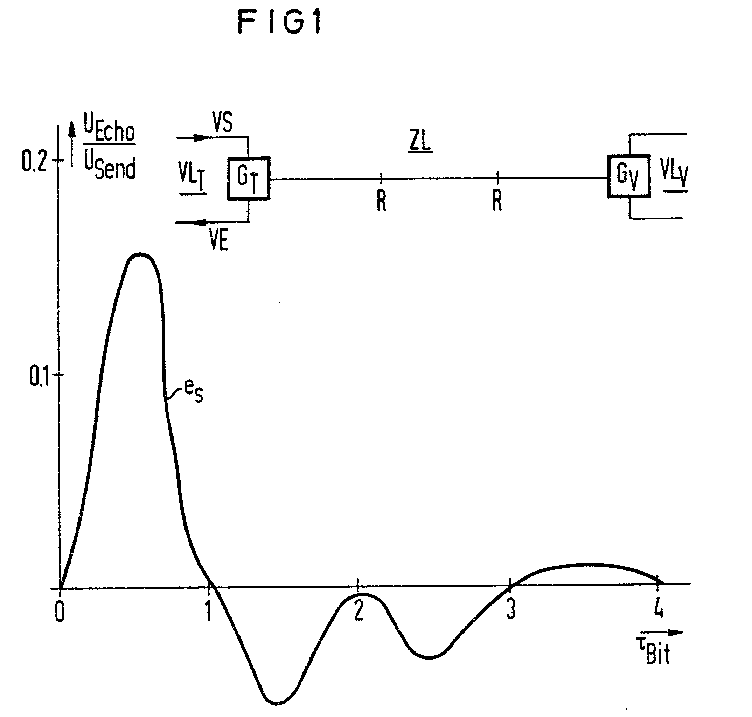

In der Zeichnung Fig. 1 oben ist schematisch ein Fernmeldesystem mit einer zwischen zwei Vierdrahtleitungsabschnitten $VL_T$, $VL_V$ liegenden, beiderseits mit einer Gabelschaltung $G_T$ bzw. $G_V$ abgeschlossenen Zweidrahtleitung ZL dargestellt, wobei angedeutet ist, daß diese Zweidrahtleitung ZL beispielsweise durch Durchmesseränderungen der Leitungsadern bedingte Stoßstellen R aufweist. An solchen Stoßstellen und ebenso an einer nicht angepaßten Gabelschaltung treten bei einer Signalübertragung Signalreflexionen auf, die zur Folge haben, daß beispielsweise auf einen in dem bei der Gabelschaltung $G_T$ ankommenden Vierdrahtleitungszweig VS auftretenden, über Gabelschaltung $G_T$ und Zweidrahtleitung ZL zur Gegenstelle $G_V$-$VL_V$ übertragenen Signalimpuls hin in dem von der Gabelschaltung $G_T$ abgehenden Vierdrahtleitungszweig VE ein Störsignal es auftritt, wie es etwa in Fig. 1 unten dargestellt ist ; dabei kann in dem vorderen Teil eines solchen Störsignals auch ein Signalanteil enthalten sein, der direkt auf ein durch eine ungenügende Gabelsperrdämpfung bedingtes Übersprechen vom Vierdrahtleitungszweig VS auf den Vierdrahtleitungszweig VE zurückgeht.

Eben ein solches auf einen ersten Sendesignalimpuls hin in einer für eine Signalübertragung in der Gegenrichtung nicht verfügbaren Zeitspanne auftretendes Störsignal wird nun erfindungsgemäß seriell in einen Kompensationssignalspeicher eingeschrieben und daraus zumindest während der nachfolgenden Signalübertragung auf jeden weiteren Sendesignalimpuls hin als Kompensationssignal wieder ausgelesen, das dann mit einer Phasendrehung von 180° in dem von der Gabelschaltung abgehenden Vierdrahtleitungszweig störsignalkompensierend wirksam wird.

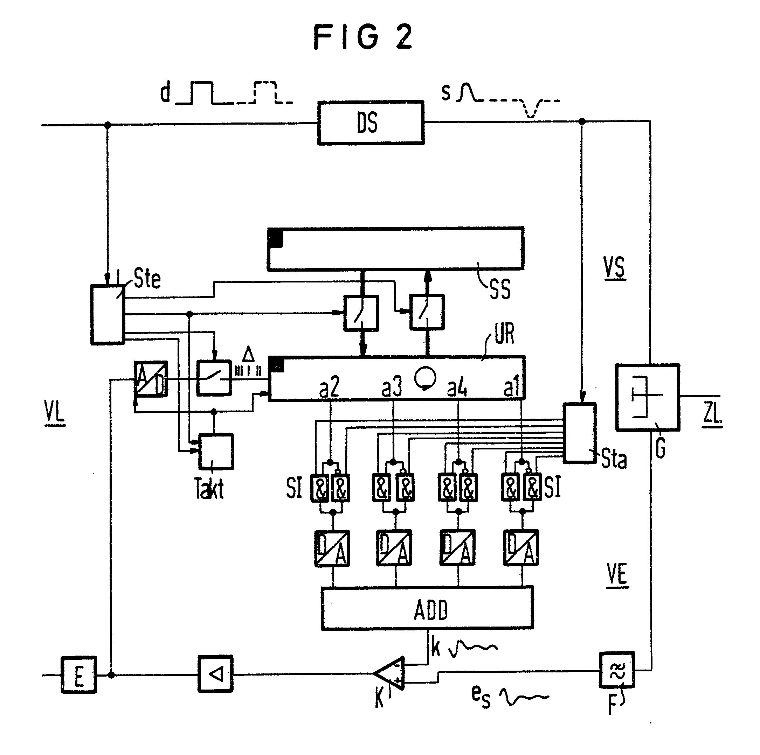

In der Zeichnung Fig. 2 ist schematisch in einem zum Verständnis der Erfindung erforderlichen Umfange ein Digital-Fernmeldesystem mit einer zwischen einem Vierdrahtleitungsabschnitt VL und einem Zweidrahtleitungsabschnitt ZL liegenden Gabelschaltung G dargestellt, wobei es sich bei der Zweidrahtleitung ZL und der Gabelschaltung G um eine Zweidraht-Teilnehmeranschlußleitung und deren teilnehmerseitigen oder vermittlungsstellenseitigen Abschluß handeln kann.

Der Vierdrahtleitungsabschnitt VL weist in seinem bei der Gabelschaltung G ankommenden Sendezweig VS eine Digitalsignal-Sendeschaltung DS zum Aussenden von Sendesignalimpulsen s vorgegebener Form bzw. mit einem vorgegebenen Schwerpunkt ihres Frequenzspektrums auf ; in Fig. 2 ist dazu angedeutet, daß die Sendeschaltung DS ihr zugeführte Binärsignalimpulse d in AMI-Signalimpulse s umsetzen möge.

In seinem von der Gabelschaltung G abgehenden Empfangszweig VE weist der Vierdrahtleitungsabschnitt VL eine Digitalsignalempfangsschaltung mit einer Filter- und ggf. auch Entzerrer-

Schaltung F und einem Digitalsignalempfänger E auf, der die von der Filterschaltung F abgegebenen Signale in entsprechende Binärsignale umsetzen möge, wobei bei Zugrundelegung der in Fig. 1 angedeuteten Signalformen ein solcher Empfangssignalwandler im Prinzip mit einer Gleichrichterschaltung realisiert sein kann.

Die Sendesignalimpulse s gelangen vom Sendezweig VS des Vierdrahtleitungsabschnittes VL über die Gabelschaltung G zur Zweidrahtleitung ZL, über die sie zu der in Fig. 2 nicht näher dargestellten Gegenstelle des Digital-Fernmeldesystems übertragen werden ; in umgekehrter Übertragungsrichtung gelangen von der Gegenstelle herrührende, über die Zweidrahtleitung ZL übertragene Signalimpulse über die Gabelschaltung G als Empfangssignalimpulse zum Empfangszweig VE des Vierdrahtleitungsabschnittes VL. Weist die Zweidrahtleitung ZL Reflexionsstellen auf, wie sie durch Stellen sprunghafter Änderungen von Leitungsparametern gegeben sein können, so gelangen außer den eigentlichen Empfangssignalimpulsen aber auch Echos der Sendesignalimpulse s zum Empfangszweig VE des Vierdrahtleitungsabschnitts VL, und außerdem können bei begrenzter Gabelsperrdämpfung auch direkt Anteile der Sendesignalimpulse s in den Empfangszweig VE gelangen. Im Empfangszweig VE tritt dann jeweils ein Empfangssignalgemisch aus den eigentlichen Empfangssignalimpulsen und einem aus Echosignalen und Übersprechsignalen zusammengesetzten Störsignal auf ; dieses Störsignal ist zu kompensieren.

Zur Kompensation eines solchen Störsignals ist zwischen dem ankommenden Vierdrahtleitungszweig VS und dem abgehenden Vierdrahtleitungszweig VE eine Übersprech- u./o. Echo-Kompensationsschaltung mit einem nach Maßgabe von Sendesignalimpulsen, die im ankommenden Vierdrahtleitungszweig VS auftreten, ansteuerbaren Kompensationssignalspeicher UR vorgesehen. Der Kompensationssignalspeicher UR ist dabei durch einen Umlaufspeicher vorzugsweise in Form eines zu einem Ring geschlossenen sog. Umlauf-Schieberegisters gebildet, dessen Umlaufzeit gleich einem Vielfachen einer Sendesignal-Bitzeitspanne ($\tau_{Bit}$ in Fig. 1) ist und der eine entsprechende Vielzahl von in jeweils einer solchen Bitzeitspanne entsprechenden Abständen aufeinanderfolgenden Ausgängen aufweist ; in Fig. 2 ist dabei angedeutet, daß die Umlaufzeit gleich dem Vierfachen einer Bitzeitspanne ist und daß das Umlauf-Schieberegister UR dementsprechend vier in entsprechenden Abständen aufeinanderfolgende Ausgänge a1, a2, a3, a4 aufweist. Jeder Umlaufspeicherausgang a ist über eine Verknüpfungsschaltung SI mit einem nachfolgenden Digital-/Analog-Wandler D/A verbindbar, der bei im Umlauf-Schieberegister UR in ΔM-Darstellung gespeichertem Kompensationssignal nur aus einem RC-Glied zu bestehen braucht. Die Ausgänge der Digital/Analog-Wandler D/A führen, über eine passive Addierschaltung ADD zusammengefaßt, zu dem Kompensationssignaleingang k des beispielsweise mit einem Differenzverstärker zu realisierenden Kompensationsgliedes K, das in den von der Gabelschaltung G abgehenden Vierdrahtleitungszweig VE eingefügt ist.

Hinter diesem Kompensationsglied K ist an den abgehenden Vierdrahtleitungszweig VE der Eingang eines Analog/Digital-Wandlers A/D, bei ΔM-Darstellung des im Umlauf-Schieberegister UR zu speichernden Kompensationssignals ein Deltamodulator, angeschlossen, der ausgangsseitig zu dem Einschreibeingang des Umlaufschieberegisters UR führt. Dabei kann, wie dies auch in Fig. 2 angedeutet ist, dem Kompensationsglied K zunächst ein fest eingestellter Verstärker nachgeschaltet sein, der die Signale auf einen für die A/D-Wandlung geeigneten Pegel bringt und die Dämpfung des passiven Additionsnetzwerks ADD ausgleicht. Über den Analog/Digital-Wandler A/D wird das in Fig. 2 angedeutet Störsignal $e_s$ (siehe auch Fig. 1 unten), das auf einen — bei von in der Gegenrichtung zu übertragenden Signalimpulsen freier Zweidrahtleitung ZL — im ankommenden Vierdrahtleitungszweig VS auftretenden ersten Sendesignalimpuls s hin im abgehenden Vierdrahtleitungszweig VE auftritt, quantisiert und codiert ; in Form des so erhaltenen Binärsignals, im Beispiel ΔM-Signals, wird das Störsignal dann in das Umlauf-Schieberegiste UR seriell eingeschrieben.

Wie oben schon erwähnt wurde, kann dies bei einem teilnehmerseitig die Zweidraht-Teilnehmeranschlußleitung ZL abschließenden Vierdrahtleitungsabschnitt VL jeweils bei einem (Wieder-) Anschalten der Speisespannung an den Teilnehmerapparat geschehen (und etwa mit Hilfe eines von der Speisespannung beaufschlagten Differenziergliedes initiert werden) oder auch beim ersten von der Teilnehmerstelle ausgehenden Proberuf ; bei einem vermittlungsstellenseitig die Zweidraht-Teilnehmeranschlußleitung ZL abschließenden Vierdrahtleitungsabschnitt VL kann das Einschreiben eines Störsignals etwa beim ersten Proberückruf zum Teilnehmer geschehen.

In dem in Fig. 2 skizzierten Ausführungsbeispiel eines Digital-Fernmeldesystems gemäß der Erfindung ist parallel zum Umlauf-Schieberegister UR ein statischer Speicher SS vorgesehen, der das in den Umlaufspeicher UR eingeschriebene Störsignal ebenfalls aufnimmt ; während das digitalisierte Störsignal im Umlaufspeicher UR rotiert, so daß es in jeder Sendesignal-Bitzeitspanne an einemder Speicherausgänge a1 ... a4 ausgelesen werden kann, bleibt es im statischen Speicher SS für spätere Übertragungsvorgänge und ggf. auch für Kontrollzwecke fest gespeichert.

In einem solchen statischen Speicher SS kann das Störsignal insbesondere dann gespeichert bleiben, wenn es im Umlauf-Schieberegister UR bei einem Abschalten des Taktes in den Pausen zwischen jeweils zwei Verbindungen verloren gehen könnte, etwa weil aus Gründen des Leistungsbedarfs der Umlaufspeicher UR bei abgeschaltetem Takt auch keinen nennenswerten Speisestrom verbrauchen soll. Der parallelgeschaltete statische Speicher SS kann dagegen ggf. entfallen, wenn das verwendete Umlauf-Schieberegister (Umlaufspeicher) UR nach Abschalten des Takts die Information solange hält, wie die (Fern-) Speisespannung anliegt.

Der Analog/Digital-Wandler A/D, der im Beispiel nur während der ersten vier Sendesignal-Bitpe-rioden das digitalisierte Störsignal ($e_s$ in Fig. 1 unten und Fig. 2) in den Kompensationssignalspeicher UR eingibt, kann in der nachfolgenden Zeit ebenfalls für Kontrollzwecke genutzt werden : Immer dann, wenn von der Gegenseite her, entweder zufällig (Serie von « O »-Bits) oder durch eine Prozedur gesteuert, keine Signalimpulse ankommen, kann der Analog/Digital-Wandler als Pegeldetektor genutzt werden, und die Genauigkeit des abgespeicherten Kompensationssignals zu prüfen.

Zur Steuerung des Einschreibens des auf einen — im skizzierten Digital-Fernmeldesystem bei-spielsweise bei einem vom Vierdrahtleitungsab-schnitt VL über die Zweidrahtleitung ZL ausgesandten ersten Proberuf erzeugten — ersten Sendesignalimpuls s hin im abgehenden Vier-drahtleitungsabschnitt VE auftretenden Störsignals $e_s$ (in Fig 1 unten und Fig. 2) in den Umlaufspeicher UR und den statischen Speicher SS und der Übernahme des im statischen Speicher SS enthaltenen digitalisierten Störsignals in den Umlaufspeicher UR bei späteren Übertragungsvorgängen sowie zur Steuerung von Prozeduren zur Kontrolle und ggf. Korrektur des abgespeicherten Signals kann eine entsprechende Steuereinrichtung Ste vorgesehen, wie dies auch in Fig. 2 angedeutet ist.

Die für den Umlaufspeicher UR bzw. für den statischen Speicher SS erforderliche Speicherkapazität ist relativ gering, da die Amplitude eines zu kompensierenden Echos mit zunehmender Laufzeit wegen der doppelten Leitungsdämpfung schnell abnimmt, wie dies auch aus Fig. 1 unten ersichtlich wird. Die Speicherkapazität ist dabei von der Abtastfrequenz des Analog/Digital-Wandlers A/D abhängig ; je höher die Abtastfrequenz ist, desto kleiner sind die Quantisierungsverzerrungen des Störsignals und desto kleiner ist der nach der Kompensation verbleibende Restfehler. Nimmt man im Beispiel eine Kompensation über vier Sendesignal- oder, allgemeiner gesagt, Leitungssignal-Bitperioden hinweg vor, so ergibt sich beispielsweise bei einem 64-kbit/s-Leitungssignal und — bei $\Delta$M-Darstellung des Kompensationssignals — einer Abtastfrequenz — und zugleich Schiebetaktfrequenz — von 1,28 MHz (entsprechend 20 Abtastwerten je Leitungssignalbit) eine erforderliche Speicherkapazität von 80 Bit.

Die im Beispiel dann in einem Abstand von jeweils 20 Bit des digitalisierten Störsignals vorgesehenen vier Speicherausgänge a1 ... a4 sind, wie schon erwähnt, jeweils über eine Verknüpfungsschaltung SI mit dem jeweils nachfolgenden Digital/Analog-Wandler, im Beispiel Deltademodulator, D/A verbindbar. Diese Verknüpfungsschaltungen SI können bei einem binären Leitungscode, d. h. bei Sendesignalimpulsen einer Polarität, jeweils durch ein einfaches Schaltglied gebildet sein ; bei einem ternären Leitungscode, d. h. bei Sendesignalimpulsen abwechselnd positiver und negativer Polarität, und in $\Delta$M-Darstellung gespeichertem Störsignal können die Verknüpfungsschaltungen SI jeweils durch eine Parallelschaltung eines einfachen Schaltgliedes und eines gesteuerten NICHT-Gliedes gebildet sein, so daß je nach dem Vorzeichen des zu kompensierenden Störsignals das Kompensationssignal invertiert oder nicht invertiert wird. Es sei hier bemerkt, daß in Abweichung von der Fig. 2 gegebenen Darstellung statt einer vor der Digital/Analog-Wandlung vorgenommenen Invertierung des noch in Digitaldarstellung vorliegenden Kompensationssignals auch nach der Digital/Analog-Wandlung eine Phasenumkehr des dann in Analogdarstellung vorliegenden Kompensationssignals vorgenommen werden kann, ohne daß dies jedoch in der Zeichnung näher dargestellt ist.

Jeweils auf einen im ankommenden Vierdraht-leitungszweig VS auftretenden Sendesigna-limpuls hin wird dann zur Kompensation des dadurch im abgehenden Vierdrahtleitungszweid VE hervorgerufenen Störsignals durch entsprechende Entriegelung eines der Schalt- bzw. NICHT-Glieder für die Dauer des im Beispiel Vierfachen einer Leitungssignal-Bitzeitspanne das im Umlaufspeicher UR als Kompensationssignal digitalisiert gespeicherte Störsignal ausgelesen und über Digital/Analog-Wandler D/A und Addierschaltung ADD dem Kompensations — glied K zugeführt. Die Auswahl des jeweils in Frage kommenden Ausgangs a des Umlaufregisters UR, in dem das als Kompensationssignal dienende gespeicherte Störsignal umläuft, kann dabei durch eine entsprechende Steuereinrichtung Sta vorgenommen werden, wie dies auch in Fig. 2 angedeutet ist. Dabei werden die einzelnen Ausgänge a1, a2, a3, a4 des Umlaufregisters UR in einer dem Muster der in einer Folge von Sendesignalbits enthaltenen Sendesignalimpulse (« 1 »-Bits) entsprechenden Reihenfolgen jeweils für die Dauer des im Beispiel Vierfachen einer Sendesignal-Bitzeitspanne entriegelt, so daß das im Umlauf-Schieberegister UR gespeicherte Störsignal ggf. an mehreren Speicherausgängen a1 ... a4 gleichzeitig mit jeweils unterschiedlicher Phasenlage ausgelesen wird ; durch die Addierschaltung ADD werden die einzelnen Signale dann durch Überlagerung zu einem kombinierten Kompensationssignal zusammengefaßt, wie es dann gerade auch erforderlich ist, um das gerade im abgehenden Vierdrahtleitungszweig VE auf-tretende, entsprechende Überlagerungen aufwei-sende Störsignal zu kompensieren.

An dieser Stelle sei noch besonders bemerkt, daß es in weiterer Ausgestaltung der Erfindung auch möglich ist, nacheinander mehrere jeweils durch einen eigenen Sendesignalimpuls erzeugte Störsignale jeweils in einem eigenen Umlaufspeicher (entsprechend dem Umlaufspeicher UR in Fig. 2) und ggf. auch eingenem statischen Speicher (entsprechend dem statischen Speicher SS in Fig. 2) einzuschreiben und daraus zumindest während der nachfolgenden Verbindung auf jeden weiteren Sendesignalimpuls hin unter Mittelwertbildung zur Bildung eines Kompensationssignals wieder auszulesen ; dies ermöglicht es, während eines einzelnen Störsignales etwa vorhandene Fremdstörungen zu eliminieren.

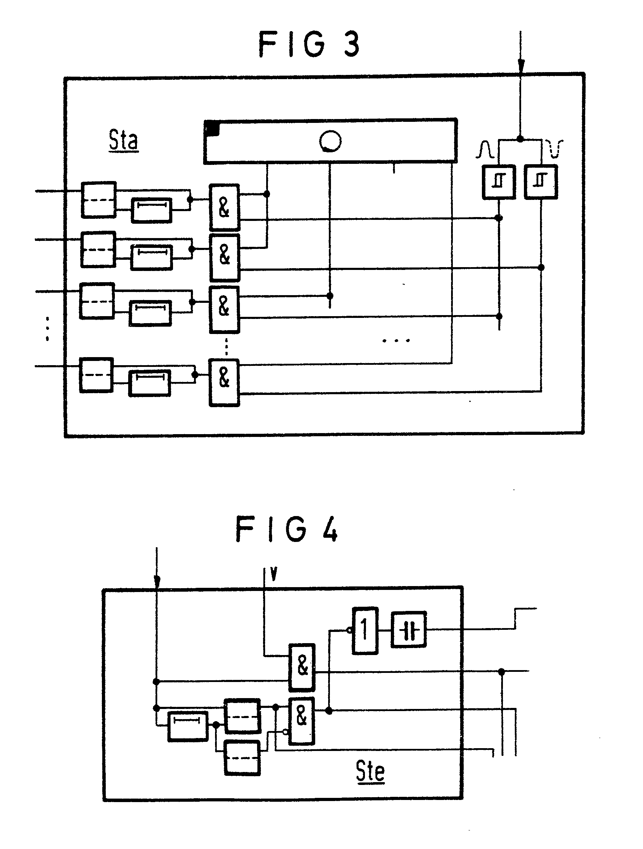

Abschließend sei noch ein Blick auf die Zeichnungen Fig. 3 und Fig. 4 geworfen, die schaltungstechnische Einzelheiten der oben erwähnten Steuereinrichtungen Sta und Ste erkennen lassen.

Die Steuereinrichtung Sta kann, wie dies in Fig. 3 angedeutet ist, ein in gleicher Weise wie das Umlauf-Schieberegister UR (in Fig. 2) ausgebildetes Umlauf-Schieberegister mit im Beispiel wiederum vier Ausgängen aufweisen, in welchem phasengleich mit dem Anfang des im Umlauf-Schieberegister UR (in Fig. 2) gespeicherten Störsignals ein Steuerbit umläuft und an dessen Ausgänge jeweils über ein durch einen (positiven bzw. negativen) Sendesignalimpuls (s in Fig. 2) entriegeltes UND-Glied ein für die Dauer von im Beispiel vier Leitungssignal-Bitzeitspannen aktivierbares bistabiles Kippglied angeschlossen ist, welches das jeweils zu entriegelnde Verknüpfungsglied (Schaltglied bzw. NICHT-Glied) SI (in Fig. 2) steuert.

Die Steuereinrichtung Ste kann, wie dies in Fig. 4 angedeutet ist, ein durch einen Sendesignalimpuls (d in Fig. 2) für die Dauer von im Beispiel vier Leitungssignal-Bitzeitspannen aktivierbares bistabiles Kippglied aufweisen, das über ein nachfolgendes, von einem weiteren bistabilen Kippglied her nach einer ersten Aktivierung des ersteren Kippgliedes gesperrtes Sperrglied den Einschreibeingang des Umlauf-Schieberegisters UR entriegelt ; dabei kann von dem Ausgang des Sperrgliedes über eine Serienschaltung eines NICHT-Gliedes und eines Differenziergliedes ein Steuersignal zur Parallelübernahme des in das Umlauf-Schieberegister UR eingeschriebenen Störsignals in den statischen Speicher SS (in Fig. 2) und von dem Ausgang des erstgenannten bistabilen Kippgliedes ein Anlaßsignal für einen Abtast- und Schiebetaktgenerator (Takt in Fig. 2) abgenommen werden. Zu Beginn späterer Verbindungen bzw. Übertragungsvorgänge kann die Steuereinrichtung Ste jeweils auf ein ihr zugeführtes Verbindungsanfangszeichen v hin über ein durch einen Sendesignalimpuls entriegelbares UND-Glied ein Steuersignal zur Parallelübernahme des im statischen Speicher SS gespeicherten Störsignals in den Umlaufspeicher UR und zum Wiederanlassen des Schiebetaktgenerators Takt (in Fig. 2) abgeben.

**Patentansprüche**

1. Digital-Fernmeldesystem mit mindestens einer zwischen einem Vierdrahtleitungsabschnitt (VL), und einem Zweidrahtleitungsabschnitt (ZL), liegenden Gabelschaltung (G), insbesondere zum teilnehmerseitigen oder vermittlungsstellenseitigen Abschluß einer Zweidraht-Teilnehmeranschlußleitung (ZL), und mit einer zwischen dem bei der Gabelschaltung (G), ankommenden Vierdrahtleitungszweig (VS) und dem von der Gabelschaltung (G) abgehenden Vierdrahtleitungszweig (VE) vorgesehenen Übersprech- u./o. Echo-Kompensationsschaltung mit einem nach Maßgabe von Sendesignalimpulsen, die in dem bei der Gabelschaltung (G) ankommenden Vierdrahtleitungszweig (VS) auftreten, ansteuerbaren Kompensationssignalspeicher (UR), der ausgangsseitig zu dem von der Gabelschaltung (G) abgehenden Vierdrahtleitungszweig (VE) führt, wobei ein Störsignal ($e_s$), das auf einen bei von in der Gegenrichtung zu übertragenden Signalimpulsen freier Zweidrahtleitung (ZL) im ankommenden Vierdrahtleitungszweig (VS) auftretenden jeweils ersten Sendesignalimpuls (s) hin im abgehenden Vierdrahtleitungszweig (VE) auftritt, seriell in den Kompensationssignalspeicher (UR) eingeschrieben wird und daraus zumindest während der nachfolgenden Verbindung auf jeden weiteren Sendesignalimpuls (s) hin als Kompensationssignal (k) wieder ausgelesen wird, dadurch gekennzeichnet, daß der Kompensationssignalspeicher (UR) durch einen Umlaufspeicher mit einer Umlaufzeit gleich einem Vielfachen einer Bitzeitspanne gebildet ist und eine entsprechende Vielzahl von in jeweils einer Bitzeitspanne entsprechenden Abständen aufeinanderfolgenden Ausgängen (a1, a2, a3, a4) aufweist, die durch eine nachfolgende Addierschaltung (ADD) zusammengefaßt sind, über die die einzelnen Ausgänge in einer einer Reihe von Sendesignalimpulsen (s) entsprechenden Reihenfolge jeweils für die Dauer des Vielfachen einer Bitzeitspanne mit dem abgehenden Vierdrahtleitungszweig (VE) verbindbar sind.

2. Digital-Fernmeldesystem nach Anspruch 1, dadurch gekennzeichnet, daß das Störsignal ($e_s$) quantisiert und codiert und dann in Form des so erhaltenen Binärsignals in den Kompensationssignalspeicher (UR) eingeschrieben wird, dessen Speicherausgängen dabei jeweils ein Digital/Analog-Wandler (D/A) nachgeschaltet ist.

3. Digital-Fernmeldesystem nach Anspruch 2, dadurch gekennzeichnet, daß das Störsignal ($e_s$) über einen Deltamodulator (A/D) in Form des so erhaltenen ΔM-Signals (Δ) in den über eine Deltamodulatorschaltung (D/A) zum abgehenden Vierdrahtleitungszweig (VE) führenden Kompensationssignalspeicher (UR) eingeschrieben wird.

4. Digital-Fernmeldesystem nach Anspruch 2 oder 3, dadurch gekennzeichnet, daß der Kompensationssignalspeicher (UR) durch ein Umlauf-Schieberegister gebildet ist.

5. Digital-Fernmeldesystem nach einem der Ansprüche 1 bis 4, dadurch gekennzeichnet, daß neben dem Umlaufspeicher (UR) ein statischer Speicher (SS) vorgesehen ist, in den das Kompensationssignal ebenfalls eingeschrieben wird, um daraus jeweils zu Beginn eines neuen Übertragungsvorganges neu in den Umlaufspeicher (UR) eingelesen zu werden.

6. Digital-Fernmeldesystem nach einem der Ansprüche 1 bis 5, dadurch gekennzeichnet, daß bei einer Gabelschaltung (G), die eine Zweidraht-Teilnehmeranschlußleitung (ZL) teilnehmerseitig abschließt, jeweils bei einem Anschalten der Speisespannung ein solcher erster Sendesignalimpuls (s) erzeugt und das daraus resultierende Störsignal (e_s) in den zugehörigen Kompensationssignalspeicher (UR) geschrieben wird, aus dem es danach wiederholt jeweils auf einen Sendesignalimpuls (s) hin als Kompensationssignal (k) ausgelesen wird.

7. Digital-Fernmeldesystem nach einem der Ansprüche 1 bis 6, dadurch gekennzeichnet, daß bei einer Gabelschaltung (G). die eine vermittlungsstellenseitig von einer Gabelschaltung abgeschlossene Zweidraht-Teilnehmeranschlußleitung (ZL) teilnehmerseitig abschließt, das Störsignal (e_s) beim ersten vom Teilnehmer ausgehenden Verbindungsaufbau in den zugehörigen Kompensationssignalspeicher (UR) eingeschrieben wird und daraus während späterer über die Zweidraht-Teilnehmeranschlußleitung (ZL) verlaufender Verbindungen als Kompensationssignal wieder ausgelesen wird.

8. Digital-Fernmeldesystem nach einem der Ansprüche 1 bis 7, dadurch gekennzeichnet, daß bei einer Gabelschaltung (G), die eine teilnehmerseitig von einer Gabelschaltung abgeschlossene Zweidraht-Teilnehmeranschlußleitung (ZL) vermittlungsstellenseitig abschließt, das Störsignal beim ersten zu dem betreffenden Teilnehmer hinführenden Verbindungsaufbau in den zugehörigen Kompensationssignalspeicher (UR) eingeschrieben wird und daraus während späterer über die Zweidraht-Teilnehmeranschlußleitung (ZL) verlaufender Verbindungen als Kompensationssignal wieder ausgelesen wird.

9. Digital-Fernmeldesystem nach einem der Ansprüche 1 bis 8, dadurch gekennzeichnet, daß nacheinander mehrere solche jeweils durch einen Sendesignalimpuls erzeugte Störsignale (e_s) jeweils in einen eigenen Speicher (UR) eingeschrieben werden und daraus zumindest während der nachfolgenden Verbindung auf jeden weiteren Sendesignalimpuls (s) hin unter Mittelwertbildung zur Bildung des Kompensationssignals wieder ausgelesen werden.

**Claims**

1. A digital telecommunications system with at least one hybrid circuit (G) which is located between a four-wire line section (VL) and a two-wire line section (ZL), in particular for terminating a two-wire subscriber connection line (ZL) at the subscriber end or at the exchange end, and with a cross-talk and/or echo compensation circuit which is arranged between the four-wire line arm (VS) incoming to the hybrid circuit (G) and the four-wire line arm (VE) outgoing from the hybrid circuit (G), having a compensation signal store (UR) which can be operated in accordance with transmitted signal pulses which occur in the four-wire line arm (VS) incoming to the hybrid circuit (G) and which feeds at its output end to the four-wire line arm (VE) outgoing from the hybrid circuit (G), where an interference signal (e_s), which occurs in the outgoing four-wire line arm (VE) in response to a first transmitted signal pulse (s), which itself occurs in the incoming four-wire line arm (VS) when the two-wire line (ZL) is free of signal pulses to be transmitted in the opposite direction, is input in serial fashion into the compensation signal store (UR) and is read out therefrom compensation signal (k), at least during the following connection, in response to each further transmitted signal pulse (s), characterised in that the compensation signal store (UR) is formed by a cyclic store having a cycle time which is equal to a multiple of a bit interval and has a corresponding number of outputs (a1, a2, a3, a4) which follow one another at intervals in each case corresponding to one bit intervals and which are assembled by a following adder circuit (ADD) via which the individual outputs can be connected to the outgoing four-wire line arm (VE) for the duration of the multiple of one bit interval, in a sequence corresponding to a sequence of transmitted signal pulses (s).

2. A digital telecommunications system as claimed in claim 1, characterised in that the interference signal (e_s) is quantized and coded and is then input, in the form of the binary signal obtained in this manner, into the compensation signal store (UR) whose store outputs are each followed by a digital/analogue converter (D/A).

3. A digital telecommunications system as claimed in claim 2, characterised in that the interference signal (e_s) is input via a delta-modulator (A/D), in the form of the ΔM-signal (Δ) obtained in this way, into the compensation signal store (UR) which leads via a delta-modulator circuit (D/A) to the outgoing four-wire line arm (VE).

4. A digital telecommunications system as claimed in claim 2 or 3, characterised in that the compensation signal store (UR) is formed by a cyclic shift register.

5. A digital telecommunications system as claimed in one of claims 1 to 4, characterised in that in addition to the cyclic store (U/R) a static store (SS) is provided into which the compensation signal is likewise input from which, at the beginning of a new transmission process, it is reinput into the cyclic store (UR).

6. A digital telecommunications system as claimed in one of the claims 1 to 5, characterised in that in a hybrid circuit (G) which terminates a two-wire subscriber connection line (ZL) at the subscriber end, whenever the feed voltage is connected a first transmitted signal pulse (s) of this kind is produced, and the resultant interference signal (e_s) is input into the associated compensation signal store (UR) from which it is then repeatedly read out, as a compensation signal (k), in response to a transmitted signal pulse (s).

7. A digital telecommunications system as claimed in one of the claims 1 to 6, characterised in that in a hybrid circuit (G) which terminates at the subscriber end a two-wire subscriber connection line (ZL) which is terminated at the exchange end by a hybrid circuit, on the occasion of the first connection establishment initiated by the subscriber the interference signal ($e_s$) is input into the associated compensation signal store (UR) from which it is read out again, as compensation signal, during later connections which extend via the two-wire subscriber connection line (ZL).

8. A digital telecommunications system as claimed in one of the claims 1 to 7, characterised in that in a hybrid circuit (G) which terminates at the exchange end a two-wire subscriber connection line (ZL) which is terminated at the subscriber end by a hybrid circuit, on the occasion of the first connection establishment leading to the subscriber in question, the interference signal is input into the associated compensation signal store (UR) from which it is read out again, as compensation signal, during later connections which take place via the two-wire subscriber connection line (ZL).

9. A digital telecommunications system as claimed in one of the claims 1 to 8, characterised in that a plurality of such interference signals ($e_s$), which are each produced by a transmitted signal pulse, are input consecutively into a separate store (UR) from which they are read out again, at least during the following connection, in response to each further transmitted signal pulse (s), whilst forming mean values for the formation of the compensation signal.

## Revendications

1. Système de télécommunication numérique comportant au moins un termineur (G) situé entre un élément de ligne quadrifilaire (VL) et un élément de ligne bifilaire (ZL), notamment pour réaliser la terminaison, côté abonné ou côté central, d'une ligne bifilaire (ZL), et comportant un circuit de compensation de la diaphonie et/ou de l'écho, prévu entre la branche (VS) de la ligne quadrifilaire arrivant dans le termineur (G) et la branche (VE) de la ligne quadrifilaire partant du termineur (G) et qui est muni d'une mémoire (UR) du signal de compensation, qui peut être commandée en fonction d'impulsions du signal d'émission qui apparaissent dans la branche (VS) de la ligne quadrifilaire arrivant dans le termineur (G), et qui aboutit, à sa sortie, à la branche (VE) de la ligne quadrifilaire qui part du termineur (G), auquel cas un signal parasite ($e_s$), qui apparaît dans la branche de départ (VE) de la ligne quadrifilaire lors de l'apparition d'une première impulsion respective (s) du signal d'émission, qui apparaît dans la branche d'arrivée (VS) de la ligne quadrifilaire lorsque la ligne bifilaire (ZL) est libre d'impulsions de signal devant être transmises dans le sens inverse, est successivement enregistré dans la mémoire (UR) du signal de compensation et lu, à partir de là, en tant que signal de compensation (k), au moins pendant la liaison établie ultérieurement, lors de l'arrivée de chaque impulsion ultérieure (s) du signal d'émission, caractérisé par le fait que la mémoire (UR) du signal de compensation est formée par une mémoire à circulation possédant un temps de circulation égal à un multiple de l'intervalle de temps d'un bit et comporte une multiplicité correspondante de sorties (a1, a2, a3, a4) se succédant à des intervalles correspondant respectivement à un intervalle de temps d'un bit et qui sont réunies par un circuit additionneur (ADD) branché en aval, par l'intermédiaire duquel les différentes sorties peuvent être reliées respectivement pendant la durée du multiple d'un intervalle de temps d'un bit à la branche de départ (VE) de la ligne quadrifilaire, selon une succession correspondant à une suite d'impulsions (s) du signal d'émission.

2. Système de télécommunication numérique suivant la revendication 1, caractérisé par le fait que le signal parasite ($e_s$) est quantifié et est codé, puis est enregistré sous la forme du signal binaire ainsi obtenu dans la mémoire (UR) du signal de compensation, en aval des sorties de laquelle sont branchés des convertisseurs numérique/analogique (D/A) respectifs.

3. Système de communication numérique suivant la revendication 2, caractérisé par le fait que le signal parasite ($e_s$) est enregistré par l'intermédiaire d'un modulateur réalisant une modulation delta (A/D) sous la forme du signal Δ/M (Δ) ainsi obtenu, dans la mémoire (UR) du signal de compensation reliée par l'intermédiaire d'un circuit réalisant une modulation delta (D/A) à la branche de départ (DE) de la ligne quadrifilaire.

4. Système de communication numérique suivant la revendication 2 ou 3, caractérisé par le fait que la mémoire (UR) de signaux de compensation est formée par un registre à décalage à circulation.

5. Système de communication numérique suivant l'une des revendications 1 à 4, caractérisé par le fait qu'en plus de la mémoire à circulation (UR), il est prévu une mémoire statique (SS) dans laquelle le signal de compensation est également enregistré, afin d'être à nouveau enregistré à partir de cette mémoire dans la mémoire à circulation (UR), respectivement au début d'un nouveau processus de transmission.

6. Système de télécommunication numérique suivant l'une des revendications 1 à 5, caractérisé par le fait que dans le cas d'un termineur (G) qui termine côté abonné une ligne bifilaire de raccordement d'abonné (7), une telle première impulsion (s) du signal d'impulsion est produite respectivement lors d'un raccordement de la tension d'alimentation et le signal parasite ($e_s$), qui en résulte, est enregistré dans la mémoire associée (UR) du signal de compensation, d'où il est ensuite extrait de façon répétée en tant que signal de compensation (k) respectivement lors de l'apparition d'une impulsion (s) du signal d'émission.

7. Système de télécommunication numérique suivant l'une des revendications 1 à 6, caractérisé par le fait que dans le cas d'un termineur (G), qui termine du côté abonné une ligne bifilaire de raccordement à l'abonné (ZL), qui est fermé par un termineur sur le côté central, le signal parasite ($e_s$) est enregistré dans la mémoire associée (UR) du signal de compensation, lors d'un premier établissement de liaison partant de l'abonné, et en est extrait à nouveau, en tant que signal de compensation, pendant des liaisons ultérieures empruntant la ligne bifilaire d'abonnée (ZL).

8. Système de télécommunication numérique suivant les revendications 1 à 7, caractérisé par le fait que dans le cas d'un termineur (G), qui termine, du côté central, une ligne bifilaire d'abonné (ZL) terminée du côté abonné, par un termineur, le signal parasite est enregistré dans la mémoire associée (UR) du signal de compensation lors du premier établissement de liaison aboutissant à l'abonné concerné et est à nouveau lu, en tant que signal de compensation, pendant des liaisons ultérieures passant par la ligne bifilaire d'abonné (ZL).

9. Système de télécommunication numérique selon l'une des revendications 1 à 8, caractérisé par le fait que successivement plusieurs signaux parasites ($e_s$) dont chacun est produit par une impulsion du signal d'émission, sont respectivement inscrits dans une mémoire (UR) qui est propre à chacun d'eux, et y sont lus au moins pendant la liaison suivante et à la suite de chaque autre impulsion du signal d'émission(s), avec formation de la valeur moyenne en vue de former le signal de compensation.

FIG1

FIG 2

# FIG 3

# FIG 4